# EUROPEAN PATENT APPLICATION

(11) **EP 2 120 026 A1**
(43) Date of publication of application: **18.11.2009**
(21) Application number: 09158882.2
(22) Date of filing: 27.04.2009
(51) Int. Cl.: G01J 3/453, G01B 9/02, G02B 5/08

(54) **Microelectromechanical lamellar grating including sloped mirror for generating an optical path difference**

(30) Priority: 12.05.2008 US 119184
(71) Applicant: Honeywell International Inc., Morristown, NJ 07962 (US)
(72) Inventor: Higashi, Robert E., Shorewood, MN 55331 (US)
(74) Representative: Buckley, Guy Julian

(57) **Abstract**

An optical instrument includes a grating (200). The grating includes a plurality of plates (210) that form a single first plane. The instrument further includes a mirror surface (110) positioned adjacent to the grating. The mirror surface is positioned in a second plane filled with respect to the first plane by an angle (130). In an embodiment, the mirror surface is made of a substrate (120), a silicon wafer positioned on the substrate, and a mirror etch pit surface on the silicon wafer.
The sloped mirror can be used for generating an optical path difference in spectral analyzes.

## Description

### Technical Field

Various embodiments relate to a microelectromechanical (MEMS) lamellar grating, and in an embodiment, but not by way of limitation, a MEMS lamellar grating that includes a sloped mirror for generating an optical path difference.

### Background

Fast and accurate spectral analysis of light can be performed using a stationary lamellar grating as an interferometer for Fourier transform spectroscopy. One or more moving parts, such as a tilting mirror, can be used to generate the needed optical path difference (OPD). An example of such a system is described in the paper "A Micromachined Stationary Lamellar Grating Interferometer for Fourier Transform Spectroscopy", published in the January 9, 2008 issue of the Journal of Micromechanics and Microengineering. This technology can be used for very compact spectral analyzers.

### Brief Description of the Drawings

**FIG. 1A** is a plan view that illustrates an example embodiment of a plurality of mask openings positioned on a substrate.
**FIG. 1B** is a tilted, perspective view of **FIG. 1A****.**
**FIG. 2A** illustrates an example embodiment of a grating.
**FIG. 2B** illustrates the grating of **FIG. 2A** with a backing portion removed.
**FIG. 3** illustrates an example embodiment of an assembled MEMS lamellar grating.
**FIG. 4** is a flowchart of an example process to manufacture a MEMS lamellar grating such as the grating illustrated in **FIG. 3****.**
**FIG. 5** is a flowchart of an example process to generate an optical path difference using a MEMS lamellar grating such as the lamellar grating illustrated in **FIG. 3****.**

### Detailed Description

In the following detailed description, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. Furthermore, a particular feature, structure, or characteristic described herein in connection with one embodiment may be implemented within other embodiments without departing from the scope of the invention. In addition, it is to be understood that the location or arrangement of individual elements within each disclosed embodiment may be modified without departing from the scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

One or more figures show block diagrams of systems and apparatus of embodiments of the invention. One or more figures show flow diagrams illustrating systems and apparatus for such embodiments. The operations of the one or more flow diagrams will be described with references to the systems/apparatuses shown in the one or more block diagrams. However, it should be understood that the operations of the one or more flow diagrams could be performed by embodiments of systems and apparatus other than those discussed with reference to the one or more block diagrams, and embodiments discussed with reference to the systems/apparatus could perform operations different than those discussed with reference to the one or more flow diagrams.

A lamellar grating, a process to manufacture such a lamellar grating using microelectromechanical (MEMS) processing technology, and a process to use such a lamellar grating are disclosed. The lamellar grating can be used as an interferometer, spectrometer, or other optical instrument. In a particular embodiment, a set of slotted openings are made in a membrane thereby forming a grating, and the membrane is then bonded face down onto a wafer with a sloped (or offset) mirror etch pit surface.

In an embodiment, a grating structure includes a small, controllable angle between interleaved grating features. The controllable angle can be implemented using an offset (from the plane of the grating) mirror structure such as an off-axis oriented silicon (111) wafer to create a sloped surface. The silicon (111) wafer is generally off-axis (that is, off the pure geometric (111) plane) by about 3-4 degrees, which creates a gradually sloped etch pit. By using wafers that are precisely oriented off the plane by an angle that is advantageous to making mirrors, a wafer full of etch pits with precise angles relative to the wafer surface is generated.

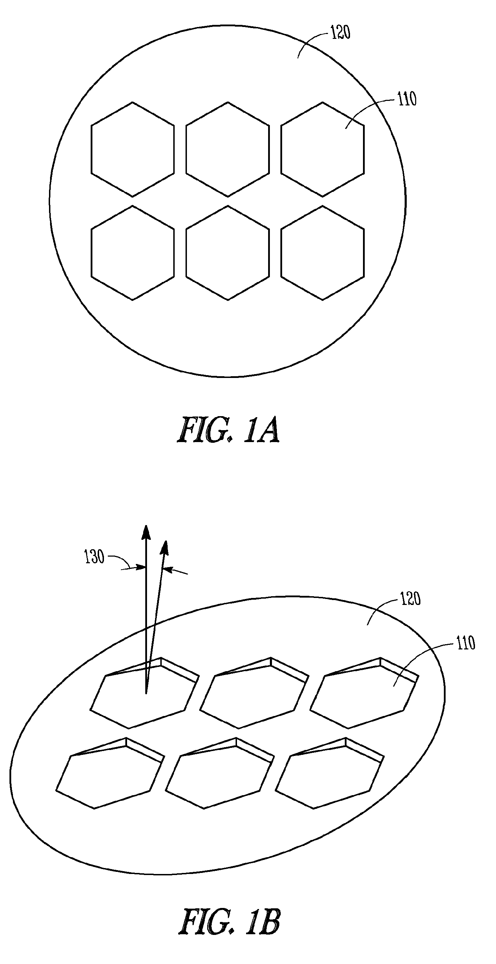

The sloped mirror etch pit can be made as follows. One or more wafers of single crystal silicon having (111) crystal planes which are oriented generally parallel to the surface of the wafer are described as being of (111) orientation. The wafer is then coated with a masking layer such as thermal silicon oxide, silicon dioxide, or silicon nitride. The thermal silicon oxide, silicon dioxide, or silicon nitride can then be patterned, removing the masking layer and exposing the silicon wafer surface in shapes and positions on the wafers, including hexagonal as illustrated in **FIG. 1A****.** In **FIG. 1A****,** the mask features **110** are positioned on the substrate **120.** After etching the masking material to create the openings **110** to expose the silicon surface, a second etch is performed to generate a mirror-like surface in the silicon (111) wafers, by defining the true (111) crystal plane. The second etch can include a potassium hydroxide etch solution with isopropyl alcohol, which etches silicon, but preferentially stops on true crystallographic (111) surfaces resulting in mirror-like surfaces. Alternative preferential etches producing similar results include potassium hydroxide solution, ethylene diamine/pyrocatechol solution, or hydrazine solution. The resulting true crystallographic (111) surface created by the etch can be metallized to augment their mirror-like properties. This can be done for example if one is working with IR radiation (since IR radiation is not reflected well by the silicon). As noted above, the nature of the (111) wafers **120** is that the wafers are about 3-4 degrees off axis. This 3-4 degrees off axis tilt can be used to generate an optical path difference (OPD) in an instrument such as an interferometer as is explained in more detail below. Further, the amount of off-axis tilt can be specified and produced by the silicon foundry in a wider range if desired, but 3-4° is what is typical in the current state of the art.

**FIG. 1B** is a perspective view of **FIG. 1A****,** thereby illustrating the tilt of the silicon (111) wafer **120.** Each pit mirror angle **130** is dictated by the particular wafer cut of the silicon (111) wafer **120.**

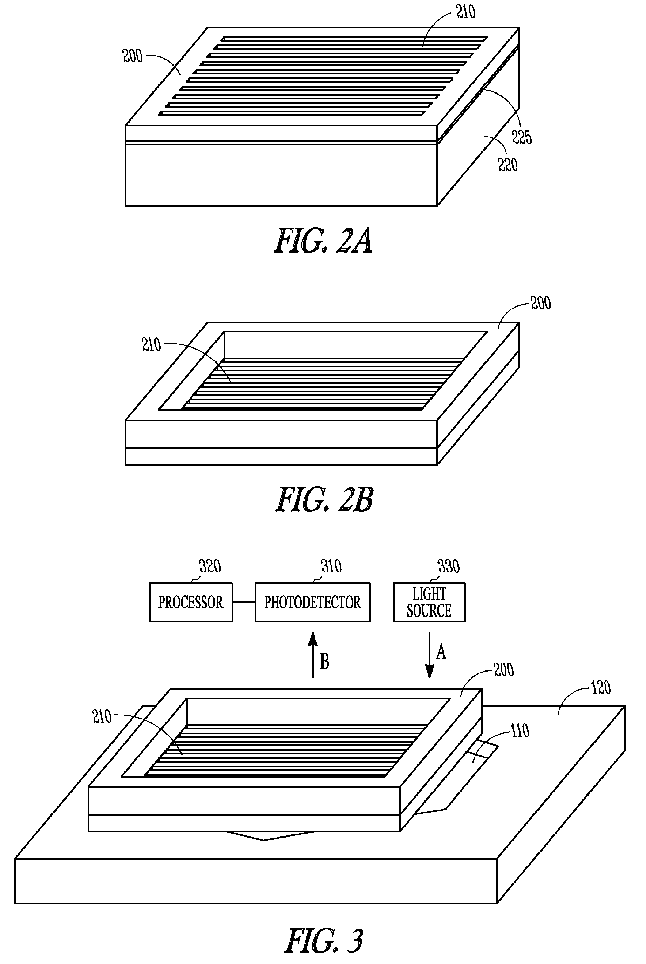

**FIGS. 2A -2B** illustrate an example of a lamellar grating structure **200** that can be used in connection with the silicon (111) wafer **100.** The grating structure **200** includes a pitch and thickness that are formed by the grating plates **210.** The pitch and thickness of the grating can be selected based on the particular application at hand and considerations of the wavelength of light involved. In an embodiment, a silicon on insulator (SOI) substrate is used and illustrated in **FIG. 2A** as **200, 220,** and a silicon dioxide layer **225** between **200, 220.** Consequently then, as is known in the art, such a SOI substrate includes two silicon wafers with an oxide layer in between. To create the grating, the grating structure **200** is first etched on the first silicon layer until the etching reaches the oxide layer. A larger window opening is then etched on the second silicon layer until once again reaching the oxide layer. The oxide layer is removed leaving the grating structure **200** supported by a silicon frame having the thickness of both the first and second silicon wafers. The resulting grating structure **200** is illustrated in **FIG. 2A****.** In another embodiment, an oxide grating can be formed via a deep reactive ion etch (DRIE). In other embodiments, glass or metal could be used for the grating structure **200.** This can augment the reflectivity of the grating plates **210.** The use of different materials such as glass or metal can also produce gratings of different pitches and thicknesses.

After the grating with the desired pitch and thickness is formed, one of the silicon layers (referred to as the back layer) is removed to release the grating. The removal can be stopped at the SOI layer, the oxide layer, or the metal layer. **FIG. 2B** illustrates the grating structure **200** after the back silicon layer is removed.

**FIG. 3** illustrates the placement of the grating structure **200** on the mask features **110** and the substrate **120.** After coupling the grating **200** to the mask features and substrate, light energy can be transmitted onto the grating **200** from a source of light energy **330** as indicated by arrow A. Some of the light will be reflected off of the grating **200** as indicated by arrow B, and it can be sensed by a photodetector array **310.** Another portion of the light will pass through the grating plates **210.** The portion of light that passes through the grating plates **210** depends in part on the pitch of the grating and the wavelength of light. The light that passes through the grating plates **210** will reflect off the mask features **110,** return back through the grating plates **210,** and be sensed by the photodetector array **310.** The photodetector array **310** is coupled to a processor **320,** which can perform a spectral analysis on the data sensed by the photodetector array **310.**

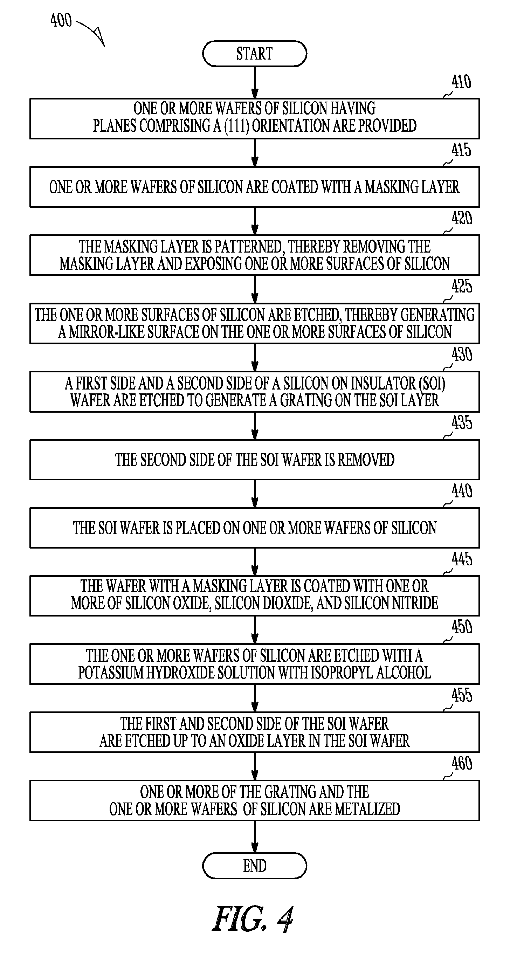

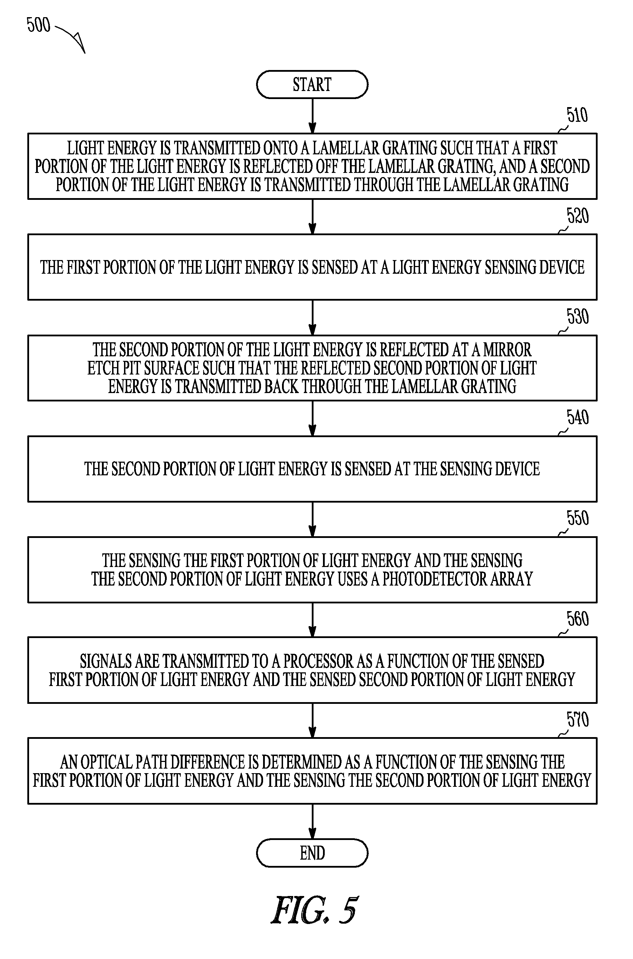

**FIGS. 4** and **5** are flowcharts of example processes **400** and **500** for making a MEMS lamellar grating and for using a MEMS lamellar grating respectively. **FIG. 4** includes a number of process blocks **410 -460,** and **FIG. 5** includes a number of process blocks **510 -570.** Though arranged serially in the examples of **FIGS. 4** and **5****,** other examples may reorder the blocks, omit one or more blocks, and/or execute two or more blocks in parallel using multiple processors or a single processor organized as two or more virtual machines or sub-processors. Moreover, still other examples can implement the blocks as one or more specific interconnected hardware or integrated circuit modules with related control and data signals communicated between and through the modules. Thus, any process flow is applicable to software, firmware, hardware, and hybrid implementations.

**FIG. 4** illustrates an example process **400** of making a MEMS lamellar grating such as the grating illustrated in **FIG. 3****.** At **410,** one or more wafers of silicon having planes comprising a (111) orientation are provided. At **415,** the one or more wafers of silicon are coated with a masking layer. At **420,** the masking layer is patterned, thereby removing the masking layer and exposing one or more surfaces of silicon. At **425,** the one or more surfaces of silicon are etched, thereby generating a mirror-like surface on the one or more surfaces of silicon. At **430,** a first side and a second side of a silicon on insulator (SOI) wafer are etched to generate a grating on the SOI wafer. At **435,** the second side of the SOI wafer is removed. At **440,** the SOI wafer is placed on the one or more wafers of silicon. At **445,** the wafer with a masking layer is coated with one or more of silicon oxide, silicon dioxide, and silicon nitride. At **450,** the one or more wafers of silicon are etched with a potassium hydroxide solution with isopropyl alcohol. At **455,** the first side and the second side of the SOI wafer are etched up to an oxide layer in the SOI wafer. At **460,** one or more of the grating and the one or more wafers of silicon are metalized.

**FIG. 5** illustrates an example process **500** of using a grating in combination with a etched silicon mirror to generate an optical path difference for use in connection with an interferometer, a spectrometer, or other optical instrument. At **510,** light energy is transmitted onto a grating such that a first portion of the light energy is reflected off the grating, and a second portion of the light energy is transmitted through the grating. At **520,** the first portion of light energy is sensed at a light energy sensing device. At **530,** the second portion of light energy is reflected at a mirror etch pit surface such that the reflected second portion of light energy is transmitted back through the grating. At **540,** the second portion of light is sensed at the sensing device. At **550,** the sensing the first portion of light energy and the sensing the second portion of light energy uses a photodetector array. At **560,** signals are transmitted to a processor as a function of the sensed first portion of light energy and the sensed second portion of light energy. At **570,** an optical path difference is determined as a function of the sensing the first portion of light energy and the sensing the second portion of light energy.

The Abstract is provided to comply with 37 C.F.R. §1.72(b) and will allow the reader to quickly ascertain the nature and gist of the technical disclosure. It is submitted with the understanding that it will not be used to interpret or limit the scope or meaning of the claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate example embodiment.

## Claims

1. An optical instrument comprising:
a grating (200), the grating comprising a plurality of plates (210) that form a single first plane; and
a mirror surface (110) positioned adjacent to the grating, the mirror surface positioned in a second plane, wherein the second plane is not parallel to the first plane.

2. The optical instrument of claim 1, wherein the mirror surface comprises:
a substrate (220); and
a mask opening (110) positioned on the substrate, the mask opening defining a mirror etch pit surface.

3. The optical instrument of claim 1, wherein the grating (200) comprises a silicon on insulator (SOI) wafer.

4. The optical instrument of claim 2, wherein the mask opening (110) positioned on the substrate comprises one or more (111) planes.

5. The optical instrument of claim 2, wherein the surface of the grating (200) is metalized and wherein the mask opening (110 positioned on the substrate is metalized.

6. The optical instrument of claim 1, comprising a source of electromagnetic radiation. (330)

7. The optical instrument of claim 6, comprising an optical detector (310) to detect the electromagnetic radiation reflected off the grating (200) and the mirror surface (110).

8. The optical instrument of claim 7, comprising a processor (320) coupled to the optical detector.

9. A process comprising:
providing a wafer of silicon having planes comprising a (111) orientation; (410)
coating the wafer of silicon with a masking layer; (415)
patterning the masking layer, thereby removing the masking layer and exposing one or more surfaces on the wafer of silicon; (420)
etching the one or more surfaces of silicon, thereby generating a mirror-like surface on the one or more surfaces of silicon; (425)
etching a first side and a second side of a silicon on insulator (SOI) wafer to generate a grating on the SOI wafer; (430)
removing the second side of the SOI wafer; and (435)
placing the SOI wafer on the one or more wafers of silicon. (440)

10. A process comprising:
transmitting light energy onto a grating such that a first portion of the light energy is reflected off the grating, and a second portion of the light energy is transmitted through the grating; (510)
sensing the first portion of light energy at a light energy sensing device; (520)
reflecting the second portion of light energy at a mirror etch pit surface such that the reflected second portion of light energy is transmitted back through the grating; and (530)
sensing the second portion of light at the light energy sensing device. (540)
